# EUROPEAN PATENT APPLICATION

(11) **EP 1 702 958 A1**
(43) Date of publication of application: **20.09.2006**
(21) Application number: 04818959.1
(22) Date of filing: 18.11.2004
(51) Int. Cl.: C08L 71/02

(54) **HARDENING RESIN COMPOSITION**

(30) Priority: 19.11.2003 JP 2003388884
(71) Applicant: KANEKA CORPORATION, Osaka-shi, Osaka 530-8288 (JP); KANEKA BELGIUM N.V., 2260 Westerlo-Oevel (BE)
(72) Inventor: FUKUNAGA, Atsushi, Kaneka Belgium N.V., B-2260 Westerlo-Oevel (BE)
(74) Representative: Vossius & Partner
(86) International application number: PCT/JP2004/017194
(87) International publication number: WO 2005/049730

(57) **Abstract**

The present invention provides a curable resin composition which comprises a reactive silyl group-containing organic polymer, is highly capable of being extruded from a cartridge and, even upon application thereof to vertical adherend surfaces, can exercise its initial fixability to fix the substrates in an instant.

The present invention relates to a curable resin composition which comprises a polyoxyalkylene polymer (a) containing at least one reactive silyl group in each molecule, 5 to 50 parts by weight of a hydrocarbon-based plasticizer (b) per 100 parts by weight of (a) and 10 to 200 parts by weight of a needle crystal filler (c) on the same basis.

## Description

### TECHNICAL FIELD

The present invention relates to a curable resin composition which comprises a reactive silyl group-containing polyoxyalkylene polymer, is highly capable of being extruded from a cartridge and, even upon application thereof to vertical adherend surfaces, can exercise its initial fixability to fix the substrates in an instant.

### BACKGROUND ART

Solvent rubber adhesives, when given a certain length of open time after application, can allow bonding between an adherend and a substrate, without the need of temporal tacking. However, such adhesives contain a solvent and therefore still have some disadvantages; for example, there is the risk of toxicity to humans, fire due to their inflammability and the like.

To solve the solvent-related problems, investigations have been made concerning aqueous emulsion type adhesives. Since, however, they contain water and, therefore, it is essential to evaporate water on the occasion of curing; thus, there arises a problem that it is difficult for them to be used for metal or plastic substrates impermeable to water. In Japanese Kokai Publication Hei-03-263478, there is proposed a novel solvent-free contact adhesion method. This uses a moisture-curable adhesive comprising a hydrolysable silyl group-containing polyoxyalkylene polymer and a hydrolysable silyl group-containing (meth)acrylic ester copolymer and, like solvent rubber adhesives, such adhesive allows bonding between adherends without temporary tacking after the lapse of a predetermined length of open time. When this adhesive is used, however, it is necessary to wait for a predetermined open time, hence immediate fixation after application cannot be realized; this is a problem.

A means for solving these problems which may be mentioned is to increase the viscosity of an adhesive composition in which a hydrolysable silyl group-containing organic polymer is used, as shown in Japanese Kokai Publication 2001-311056. Such a high viscosity adhesive composition produces a temporary tacking effect, like double-sided adhesive tapes, and can realize permanent fixation upon curing. However, when a cartridge, sausage or the like filled with such composition is mounted on a manual sealing gun or manual calking gun and the composition is extruded therefrom, a great force is required for extrusion and, therefore, quick and timely extrusion is difficult to attain. If the viscosity of the adhesive composition is lowered so that the extrudability may be improved, the composition will fail to bring about sufficient initial fixation after application, producing such a problem as falling down of adherends. Thus, it is difficult in the art to achieve both extrudability and initial fixability simultaneously.

### SUMMARY OF THE INVENTION

Thus, it is an object of the present invention to provide a curable resin composition which comprises a reactive silyl group-containing organic polymer, is highly capable of being extruded from a cartridge and, even upon application thereof to vertical adherend surfaces, can exercise its initial fixability to fix the substrates in an instant.

The inventors of the present invention explored in earnest for solving the above disadvantages. As a result, they found the curable resin composition which is highly capable of being extruded from a cartridge and, even upon application thereof to vertical adherend surfaces, can exercise its initial fixability to fix the substrates in an instant. Such findings have now led to completion of the present invention.

Thus, the present invention relates to a curable resin composition which comprises a polyoxyalkylene polymer containing at least one reactive silyl group in each molecule, 5 to 50 parts by weight of a hydrocarbon-based plasticizer per 100 parts of the organic polymer and 10 to 200 parts by weight of a needle crystal filler on the same basis and, thus, to a curable resin composition showing good extrudability and initial fixability.

### DETAILED DESCRIPTION OF THE INVENTION

The extrudability so referred to herein is expressed in terms of the weight of the composition extruded from a polyethylene cartridge (manufactured by Fischbach USA Inc.) filled with the composition and fitted with a nozzle having an aperture diameter of 6.5 mm in 1 minute under a pressure of 2 bars as created by an air gun.

For determining the initial fixability so referred to herein, the composition is applied uniformly to one side of an aluminum substrate (150 mm x 30 mm x 2 mm) to a thickness of 2 mm, another aluminum substrate (150 mm x 15 mm x 2 mm) is immediately attached to the composition layer, one of the aluminum substrates is fixed, the other is fitted with a spring balance, and the spring balance is manually pulled up gradually. The numerical value on the spring balance is read at the moment of slippage of the aluminum substrates from each other. Five runs are carried out, the maximum and minimum values are excluded, and the initial fixability is expressed in terms of the mean of the remaining three numerical values.

The main chain skeleton of the polyoxyalkylene polymer (a) to be used in the present invention containing at lest one reactive silyl group in each molecule essentially has a repeating unit represented by the general formula (1);

―R¹―O― (1)

(in the formula, R¹ represents a divalent organic group and is preferably a straight chain or a branched alkylene group having 1 to 14 carbon atoms).

R¹ in the general formula (1) is preferably a straight chain or a branched alkylene group having 1 to 14, more preferably 2 to 4 carbon atoms. As a specific example of the repeating unit represented by the general formula (1), there may be mentioned, for example; 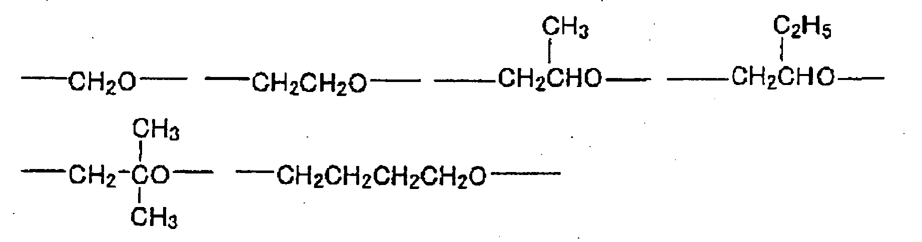 ; and the like. The main chain skeleton of the polyoxyalkylene polymer may comprise only a single repeating unit, or may comprise two or more repeating units.. Particularly, when the polymer is used for a sealant, adhesive and the like, it preferably comprises a polymer containing oxypropylene as a main component.

As a process for synthesizing the polyoxyalkylene polymer, there may be mentioned, but is not particularly limited to, for example, a polymerization process comprising using an alkaline catalyst such as KOH; a polymerization process comprising using a transition metal compound-porphyrin complex catalyst such as a complex obtainable by reacting an organoaluminum compound and porphyrin, which is disclosed in Japanese Kokai Publication Sho-61-215623; a polymerization process comprising using a bimetallic cyanide complex catalyst, which is disclosed in Japanese Kokoku Publication Sho-46-27250, Japanese Kokoku Publication Sho-59-15336 and the like; and the like.

In the main chain skeleton of the above polyoxyalkylene polymer, other components such as urethane-bonding component may be contained within the range that the physical characteristics of the polyoxyalkylene polymer are not remarkably impaired.

The polyoxyalkylene polymer containing the above urethane-bonding component is not particularly restricted, and there may be mentioned, for example, those obtainable by reacting aromatic polyisocyanates such as toluene (tolylene) diisocyanate, diphenylmethane diisocyanate, xylylene diisocyanate and the like; aliphatic polyisocyanates such as isophorone diisocyanate, hexamethylene diisocyanate and the like, with a polyol having the repeating unit of the above general formula (1), and the like.

The reactive silyl group contained in the component (a) has a hydroxyl group or a hydrolysable group bound to a silicon atom, and is capable of crosslinking by forming a siloxane bonding. As a typical example thereof, there may be mentioned a group represented by the general formula (2); 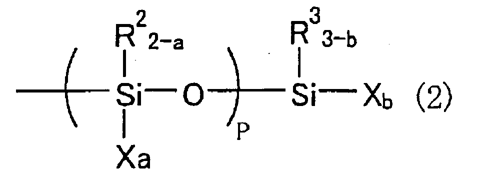 (in the formula, R² and R³ each represents an alkyl group having 1 to 20 carbon atoms, an aryl group having 6 to 20 carbon atoms, an aralkyl group having 7 to 20 carbon atoms or a triorganosiloxy group represented by R⁴₃SiO- (R⁴ represents a monovalent hydrocarbon group having 1 to 20 carbon atoms and three R⁴s may be the same or different), and when two or more R²s or R³s are present, they may be the same or different; X represents a hydroxyl group or a hydrolysable group, and when two or more Xs are present, they may be the same or different; a represents 0, 1 or 2, and b represents 0, 1, 2 or 3, respectively; p represents an integer of 0 to 19, and when p is 2 or more, a of the number p in the general formula (3); 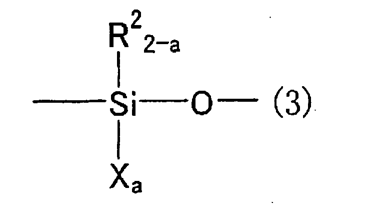 ; are not necessarily the same; however, the relation (the sum of a) + b ≥ 1 should be satisfied).

The above hydrolysable group represented by X is not particularly restricted and may be a conventionally known hydrolysable group. Specifically, there may be mentioned, for example, a hydrogen atom, a halogen atom, an alkoxy group, an acyloxy group, a ketoxymate group, an amino group, an amide group, an acid amide group, an aminoxy group, a mercapto group, an alkenyloxy group and the like. Among these, preferred are a hydrogen atom, an alkoxy group, an acyloxy group, a ketoxymate group, an amino group, an amide group, an aminoxy group, a mercapto group and an alkenyloxy group. Particularly preferred is the alkoxy group in view of mild hydrolysability and handling easiness. As the alkoxy group, a methoxy group and an ethoxy group is preferred.

The number of said hydrolysable group or hydroxyl group which can be bound to one silicon atom is within the range of 1 to 3, and (the sum of a) + b is preferably within the range of 1 to 5. When two or more hydrolysable groups or hydroxyl groups are bound to the reactive silyl group, they may be the same or different.

The silicon atom forming the above reactive silyl group may be one or two or more. However, when the silicon atoms are linked by a siloxane bonding or the like, the number may be about 20.

Additionally, a reactive silyl group represented by the general formula (4); 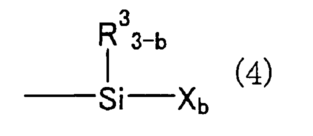 (in the formula, R³, X and b are the same as defined above); is preferred in view of easy availability.

Moreover, as specific examples of R² and R³ in the above general formulas (3) and (4), there may be mentioned, for example, alkyl groups such as a methyl group, an ethyl group and the like; cycloalkyl groups such as a cyclohexyl group and the like; aryl groups such as a phenyl group and the like; aralkyl groups such as a benzyl group and the like; triorganoxiloxy groups represented by R⁴₃SiO- wherein R⁴ is a methyl group, a phenyl group and the like; and the like. Among these, the methyl group is preferred. Furthermore, as a specific structure of the reactive silyl group, an alkoxysilyl group is preferred, and particularly preferred are a trimethoxysilyl group, a methyldimethoxysilyl group, a triethoxysilyl group and a methyldiethoxysilyl group. The reactive silyl group can be used in one species, or two or more of these can be used in combination.

The reactive silyl group can be introduced by conventional manners. That is, there may be mentioned the following processes, for example.
(A) An unsaturated group-containing polyoxyalkylene polymer is obtained by reacting a polyoxyalkylene polymer containing a functional group such as a hydroxyl group and the like within the molecule with an organic compound containing an active group showing the reactivity to said functional group and an unsaturated group. Alternatively, an unsaturated group-containing polyoxyalkylene polymer is obtained by copolymerization with an unsaturated group-containing epoxy compound. Then, the obtained reaction product is subjected to hydrosilylation by reacting with a reactive silyl group-containing hydrosilane.
(B) An unsaturated group-containing polyoxyalkylene polymer obtained in the same manner as the process (A) is reacted with a compound containing a mercapto group and a reactive silyl group.
(C) A polyoxyalkylene polymer containing a functional group such as a hydroxyl group, an epoxy group, an isocyanate group and the like within the molecule is reacted with a compound containing a functional group showing the reactivity to said functional group and a reactive silyl group.

Among these processes mentioned above, preferred is the process (A), or the process (C) in which hydroxyl group-terminated polymer and a compound containing an isocyanate group and a reactive silyl group are reacted.

The polymer as the component (a) may comprise a straight chain or a branched structure, and the molecular weight thereof is about 500 to 50,000, more preferably 1,000 to 30,000. The number of the reactive silyl group to be contained is at least one, preferably 1.1 to 5 on average, in each molecule of the polymer. When the number of the reactive silyl group contained in one molecule is less than 1, the curability becomes insufficient, or when there are too many such groups, the network structure becomes too tight to show preferable mechanical properties.

As specific examples of the component (a), there may be mentioned, but not particularly limited to those suggested in Japanese Kokoku Publication Sho-45-36319, Japanese Kokoku Publication Sho-46-12154, Japanese Kokai Publication Sho-50-156599, Japanese Kokai Publication Sho-54-6096, Japanese Kokai Publication Sho-55-13767, Japanese Kokai Publication Sho-55-13468, Japanese Kokai Publication Sho-57-164123, Japanese Kokoku Publication Hei-3-2450, U.S. Patent No.3,632,557, U.S. Patent No.4,345,053, U.S. Patent No.4,366,307, U.S. Patent No.4,960,844 and the like. Additionally, there may also be mentioned oxyalkylene polymers having high molecular weight and narrow molecular weight distribution, namely, the number average molecular weight of not less than 6,000 and Mw/Mn of not more than 1.6, which are suggested in Japanese Kokai Publication Sho-61-197631, Japanese Kokai Publication Sho-61-215622, Japanese Kokai Publication Sho-61-215623, Japanese Kokai Publication Sho-61-218632 and the like.

The above reactive silyl group-containing polyoxyalkylene polymer may be used alone, or two or more of these may be used in combination. Moreover, a reactive silyl group-containing vinyl polymer may also be blended.

The process for blending a reactive silyl group-containing vinyl polymer is suggested in Japanese Kokai Publication Sho-59-122541, Japanese Kokai Publication Sho-63-112642, Japanese Kokai Publication Hei-6-172631 and the like. A preferable specific example comprises blending a reactive silyl group-containing polyoxyalkylene polymer with a reactive silyl group-containing copolymer having the molecular chain substantially composed of an acrylic ester monomer unit and/or methacrylic ester monomer unit having an alkyl group containing 1 to 8 carbon atoms which is represented by the following general formula (5); 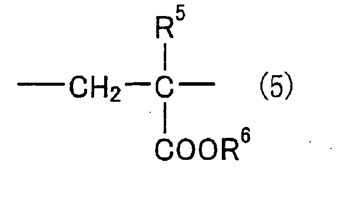 (in the formula, R⁵ represents a hydrogen atom or a methyl group and R⁶ represents an alkyl group containing 1 to 8 carbon atoms); and an acrylic ester monomer unit and/or methacrylic ester monomer unit having an alkyl group containing 10 or more carbon atoms which is represented by the following general formula (6); 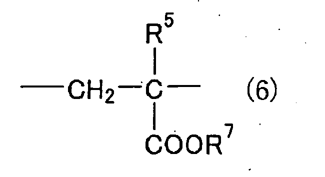 (in the formula, R⁵ is the same as defined above, and R⁷ represents an alkyl group containing 10 or more carbon atoms).

As R⁶ in the above general formula (5), there may be mentioned, for example, alkyl groups containing 1 to 8, preferably 1 to 4, more preferably 1 to 2 carbon atoms such as a methyl group, an ethyl group, a propyl group, an n-butyl group, a t-butyl group, a 2-ethylhexyl group and the like. The alkyl groups represented by R⁶ may be the same or different.

As R⁷ in the above general formula (6), there may be mentioned, for example, alkyl groups with long chain containing 10 or more, generally 10 to 30, preferably 10 to 20 carbon atoms such as a lauryl group, a tridecyl group, a cetyl group, a stearyl group, a behenyl group and the like. The alkyl groups represented by R⁷ may be the same or different, as in the case of R⁶.

The molecular chain of said vinyl copolymer substantially comprises the monomer units of the formula (5) and (6). Herein, "substantially comprises" means that the total monomer units of the formula (5) and (6) occurring in said vinyl copolymer exceeds 50% by weight. The total monomer units of the formula (5) and (6) is preferably not less than 70% by weight.

The occurring ratio of the monomer unit of the formula (5) and that of the formula (6) is preferably 95:5 to 40:60 and more preferably 90:10 to 60:40 on the weight ratio basis.

As a monomer unit other than those of the formula (5) and (6) which may be contained in said vinyl copolymer, there may be mentioned, for example, acrylic acids such as acrylic acid, methacrylic acid and the like; amide group-containing monomers such as acrylamide, methacrylamide, N-methylol acrylamide, N-methylol methacylamide and the like; epoxy group-containing monomers such as glycidyl acrylate, glycidyl methacrylate and the like; amino group-containing monomers such as diethylaminoethyl acrylate, diethylaminoethyl methacrylate, aminoethylvinylether and the like; other monomer units attributed to acrylonitrile, styrene, α-methylstyrene, an alkyl vinyl ether, vinyl chloride, vinyl acetate, vinyl propionate, ethylene and the like.

As said vinyl copolymer, those having the number average molecular weight of 500 to 100,000 are preferred in view of handling easiness.

The reactive silyl group contained in said vinyl copolymer is represented by the general formula (7); 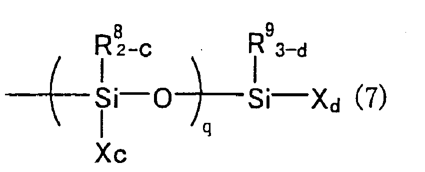 (in the formula, R⁸ and R⁹ each represents a substituted or unsubstituted univalent organic group containing 1 to 20 carbon atoms or a triorganosiloxy group; X.represents a hydroxyl group or a hydrolysable group of the different or the same species; c represents an integer of 0, 1 or 2, and d represents an integer of 0, 1, 2 or 3, respectively; q represents an integer of 0 to 19, and when q is not less than 2, c is not necessarily the same; however, the relation ((the total of c) + d ≥ 1) should be satisfied). From the economic and the like viewpoxint, a preferable reactive silyl group is the group represented by the general formula (8); 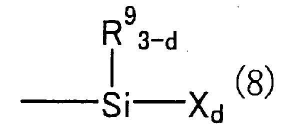 (in the formula, R⁹, X and d are the same as defined above).

The number of the reactive silyl group in said vinyl copolymer is, on average, preferably not less than 1, more preferably not less than 1.1, and particularly preferably not less than 1.5 in each molecule in view of obtaining the sufficient curability.

As specific examples of the hydrolysable group represented by X in the formula (7), there may be mentioned, for example, a halogen atom, a hydrogen atom, an alkoxy group, an acyloxy group, a ketoximate group, an amino group, an amide group, an aminoxy group, a mercapto group, an alkenyloxy group and the like. Among these, in view of mild hydrolysability, alkoxy groups such as a methoxy group, an ethoxy group and the like are preferred.

Moreover, as specific examples of R⁸ and R⁹ in the formula (7), there may be mentioned, for example, alkyl groups such as a methyl group, an ethyl group and the like; cycloalkyl groups such as a cyclohexyl group and the like; aryl groups such as a phenyl group and the like; aralkyl groups such as a benzyl group and the like; and the like. Additionally, R⁸ and R⁹ may be a triorganosiloxy group represented by R⁴₃SiO- (R⁴ is the same as defined above). Among these, a methyl group is particularly preferred.

Furthermore, usable as a process for producing an organic polymer obtainable by blending a reactive silyl group-containing vinyl polymer is, in addition to those mentioned above, a process comprising polymerizing (meth)acrylic ester monomer in the presence of a reactive silyl group-containing polyoxyalkylene polymer. This production process is specifically disclosed in the publications such as Japanese Kokai Publication Sho-59-78223, Japanese Kokai Publication Sho-59-168014, Japanese Kokai Publication Sho-60-228516, Japanese Kokai Publication Sho-60-228517 and the like. However, these are not limitative ones.

As the hydrocarbon-based plasticizer (b) to be used in the present invention, those conventionally well-known can be used, and particularly preferred are aliphatic hydrocarbon ones such as paraffin-based, olefin-based, diolefin-based, polyolefin-based, acetylene-based and the like ones. Structurally, either straight chain ones or branched ones may be used. Moreover, polymers of unsaturated group-containing hydrocarbon and reaction products obtainable by adding hydrogen to said polymer can also be used.

More preferred are paraffin-based hydrocarbons, and remarkable effects can be obtained when paraffin-based hydrocarbons containing 6 or more, more preferably 8 to 18 carbon atoms are used. Since those containing a small number of carbon atoms volatilize at a high temperature, and those containing a large number of carbon atoms solidify at a low temperature, and thus sufficient effects cannot be obtained depending on the temperature conditions.

Specifically, there may be mentioned, but not limited to, straight chain paraffin-based ones such as n-octane, n-nonane, n-decane, n-undecane, n-dodecane, n-tridecane, n-tetradecane, n-hexadecane, n-heptadecane, n-octadecane and the like; isoparaffin-based ones such as 2-ethylheptane, 3-methylheptane, 2-methyloctane, 3-methyloctane, 2-methylnonane, 3-methylnonane, 4,5-dipropyloctane, 3-methyltridecane, 6-methyltridecane and the like; cycloparaffin-based ones such as cyclohexane, cyclodecane and the like; and the like. Among these, in view of compatibility with a polyoxyalkylene polymer, cycloparaffin-based ones obtainable by adding hydrogen to an aromatic ring, and isoparaffin-based ones having a branched chain structure within the molecule are particularly preferred.

The curable resin composition of the present invention contains 5 to 50 parts by weight of the hydrocarbon-based plasticizer (b) per 100 parts by weight of the polyoxyalkylene polymer (a). The lower limit is preferably not less than 15 parts by weight, and more preferably not less than 20 parts by weight. The upper limit is preferably not more than 45 parts by weight, and more preferably not more than 40 parts by weight.

The needle crystal filler (c) to be used in the present invention has the aspect ratio (length of the particle/ diameter of the particle) of not less than 2.5, particularly preferably not less than 3. When the aspect ratio is small, the composition is not provided with sufficient thixotropy, sagging may occur, or the initial fixability may not be sufficiently obtained upon application thereof to a vertical adherend surface.

As such a needle crystal filler, there may be mentioned, but not limited to, inorganic fibers and organic fibers such as sepiolite, asbestos, wollastonite, needle crystal type calcium carbonate, glass fiber, carbon fiber and the like. These may be used alone or in combination. Among these needle crystal fillers, needle crystal type calcium carbonate is preferred in view of the storage stability and mechanical properties.

The curable resin composition of the present invention contains 10 to 200 parts by weight of the needle crystal filler (c) per 100 parts by weight of the polyoxyalkylene polymer (a). The lower limit is preferably 30 parts by weight, and the upper limit is preferably 100 parts by weight.

The curable resin composition of the present invention preferably has the extrudability of not less than 200 g/min and the initial fixability of not less than 180 g. The extrudability is more preferably not less than 300 g/min and preferably not more than 1,000 g/min. The initial fixability is more preferably not less than 190 g and preferably not more than 1,000 g.

Furthermore, the composition of the present invention may contain a silanol condensation catalyst which promotes reaction of a reactive silyl group. As such a silanol condensation catalyst, there may be mentioned titanate esters such as tetrabutyl titanate, tetrapropyl titanate, tetraisopropyl titanate and the like; organotin compounds such as dibutyltin dilaurate, dibutyltin maleate, dibutyltin diacetate, tin octylate, tin dioctylate, tin naphthenate, tin stearate, tin versatate, a reaction product produced from dibutyltin oxide and phthalate ester, dibutyltin diacetyl acetonate and the like; organoalminum compounds such as aluminum tris acetylacetonate, aluminum tris etylacetoacetate, diisopropoxy aluminum etylacetoacetate and the like; a reaction product produced from bismuth salts such as bismuth-tris(2-ethyl hexoate), bismuth-tris(neodecanoate) and the like, and organocarboxylic acid or organic amine, and the like; chelate compounds such as zirconium tetraacetyl acetonate, titan tetraacetyl acetonate and the like; organozinc compounds such as zinc octylate and the like; organoiron compounds such as iron naphthenate and the like; organovanadium compounds; amine compounds such as butylamine, octylamine, laurylamine, dibutylamine, monoethanolamine, diethanolamine, triethanolamine, diethylene triamine, triethylene tetramine, oleylamine, cyclohexylamine, benzylamine, diethylaminopropylamine, xylylenediamine, triethylenediamine, guanidine, diphenyl guanidine, 2,4,6-tris(dimethylaminomethyl)phenol, morpholine, N-methylmorpholine, 2-ethyl-4-methylimidazole, 1,8-diazabicyclo(5,4,0)undecene-7(DBU) and the like or salts thereof with a carboxylic acid and the like; low molecular weight polyamide resins obtainable from excessive polyamines and a polybasic acid; reaction products obtainable from excessive polyamines and an epoxy compound; and the like. However, these are not limitative ones, and generally used condensation catalysts can be used. These silanol catalysts may be used alone, or two or more of these may be used in combination. Among these silanol condensation catalysts, preferred are organometallic compounds or a combination of organometallic compounds and amine compounds in view of the curability. More preferred are, in view of the rapid curing rate, dibutyltin maleate, a reaction product produced from dibutyltin oxide and phthalate ester, and dibutyltin diacetyl acetonate. Furthermore, since a curable resin composition with high reproduction rate can be obtained, a combination of tin dioctylate and laurylamine is preferred, and particularly preferred is the combination comprising 0.5 to 10 parts by weight of tin dioctylate and 0.1 to 10 parts by weight of laurylamine per 100 parts by weight of the reactive silyl group-containing polyoxyalkylene polymer (a).

In the curable resin composition of the present invention, where necessary, various additives may be added other than those mentioned above, such as a filler, a plasticizer, an antisagging agent, a colorant, a silane coupling agent, a reinforcing resin, a storage stability improver, an antiaging agent, an ultraviolet absorber, a metal deactivator, an antiozonant, a light stabilizer, an amine-based radical chain inhibitor, a phosphorous peroxide decomposer, a lubricant, a pigment, a foaming agent and the like. However, as for the plasticizer and filler, it is necessary to adjust the addition amount thereof according to the amount of the hydrocarbon-based plasticizer (b) and needle crystal filler (c) contained.

As the filler, usable are reinforcing fillers such as fumed silica, precipitated silica, silicic anhydride, hydrous silicic acid, carbon black and the like; fillers such as calcium carbonate, magnesium carbonate, diatom earth, calcined clay, clay, talc, kaolin, titanium oxide, glass balloon, Shirasu balloon, organic balloon and the like; and the like.

Preferable result can be obtained when 10 to 500 parts by weight of these fillers and the needle crystal filler (c) are used per 100 parts by weight of the polyoxyalkylene polymer (a). Naturally, these fillers may be used alone, or two or more of these may be used in combination.

As the plasticizer, ones other than the hydrocarbon-based plasticizer (b) may be used, and usable are phthalic esters such as diisodecyl phthalate, diundecyl phthalate, diisoundecyl phthalate, dioctyl phthalate, dibutyl phthalate, butylbenzyl phthalate and the like; aliphatic dibasic acid esters such as dioctyl adipate, isodecyl succinate, dibutyl sebacate and the like; glycol esters such as diethyleneglycol dibenzoate, pentaerythritol ester and the like; aliphatic esters such as butyl oleate, methyl acetylricinolate and the like; phosphate esters such as tricresyl phosphate, trioctyl phosphate, octyl diphenyl phosphate and the like; epoxy plasticizers such as epoxidized soybean oil, epoxidized linseed oil, benzyl epoxystearate and the like; polyester plasticizers such as polyesters of a dibasic acid and dihydric alcohol, and the like; polyethers such as polypropyrene glycol, detivatives thereof and the like; polystyrenes such as poly-α-methylstyrene, polystyrene and the like; and the like. These may be used alone or two or more of these may be used in the form of a mixture arbitrary. In view of the compatibility between the polyoxyalkylene polymer (a) and the hydrocarbon-based plasticizer (b), preferred are combinations of these plasticizers and the hydrocarbon-based plasticizer (b), and particularly preferably polyethers such as polypropyrene glycol, detivatives thereof and the like are used in combination with the hydrocarbon-based plasticizer (b).

It is effective to use these plasticizers and fillers in combination since stretchability of the cured product can be increased, and a large amount of fillers can be mixed.

As the antisagging agent, there may be mentioned a hydrogenated castor oil derivative; polyamide wax; metal soaps such as calcium stearate, aluminum stearate, barium stearate and the like; and the like. These may be used in an arbitrary amount according to need depending on the purpose to be used, or mixing of a filler, a reinforcing resin and the like.

As the colorant, inorganic pigments, organic pigments, dyes and the like which are generally used can be used according to need.

As the silane coupling agent, there may be specifically mentioned, but not limited to, amino group-containing silanes such as γ-aminopropyltrimethoxysilane, γ-aminopropyltriethoxysilane, γ-aminopropylmethyldimethoxysilane, N-(β-aminoethyl)-γ-aminopropyltrimethoxysilane, N-(β-aminoethyl)-γ-aminopropyltriethoxysilane, N-(β-aminoethyl)-γ-aminopropylmethyl dimethoxysilane, 1,3-diaminoisopropyl trimethoxysilane and the like; mercapto group-containing silanes such as γ-mercaptopropyl trimethoxysilane γ-mercaptopropyl dimethoxysilane and the like; vinyl type unsaturated group-containing silanes such as vinyltrimethoxysilane, vinyltriethoxysilane, γ-methacryloyolxypropyl trimethoxysilane, γ-acryloyloxypropyl methyldimethoxysilane and the like; chlorine atom-containing silanes such as γ-chloropropyltrimethoxysilane and the like; isocyanate-containing silanes such as γ-isocyanatepropyltriethoxysilane, γ-isocyanatepropylmethyldimethoxysilane and the like; hydrosilanes such as methyldimethoxysilane, trimethoxysilane, methyldiethoxysilane and the like; and the like.

A specific example of the process for preparing the composition comprising the polyoxyalkylene polymer (a), the hydrocarbon-based plasticizer (b) and the needle crystal filler (c) according to the present invention comprises adding the hydrocarbon-based plasticizer (b) and the needle crystal filler (c) to the polyoxyalkylene polymer (a), and arbitrary adjusting the stirring conditions and the like, according to need, to disperse them uniformly. Additionally, a process comprising mixing each component using a mixer, roll, kneader and the like can also be used. By preparing the composition of the present invention by the above process under a condition substantially without water, an one-component composition can be obtained. When the obtained composition is preserved in a sealed state, a long-term storage is possible, and curing starts from the surface when exposed to air.

The curable resin composition of the present invention is useful as an elastic sealing adhesive in the construction fields, civil engineering works, industrial applications and the like.

### BEST MODE FOR CARRYING OUT THE INVENTION

The following examples illustrate the present invention more specifically. These examples are, however, by no means limitative of the technical scope of the present invention.

### (Example 1)

A curable resin composition was obtained by kneading 100 parts by weight of polyoxypropylene (molecular weight 15,000, Mw/Mn=1.1) containing a reactive silyl group within the molecule which was synthesized by the process described in Synthesis Example 1 of International Publication No.91/13928, 100 parts by weight of ground calcium carbonate (product name: Carbital-110S (manufactured by Imerys Minerals Japan K.K.)), 50 parts by weight of a needle crystal filler (needle colloidal calcium carbonate, product name: SOCAL 90A (manufactured by SOLVAY S.A.)), 30 parts by weight of polyoxypropyrene with the molecular weight of 3,000, 20 parts by weight of a cycloparaffin-based plasticizer (a completely hydrogenated and cyclized saturated hydrocarbon mixture, product name: Exxsol D110 (manufactured by Exxon Mobil Corporation)), 20 parts by weight of titanium oxide, 15 parts by weight of an amide wax type thixotropic agent (product name: Crayvallac Super (manufactured by Cray Valley Corporation)), 1 part by weight of styrenated phenol as an antioxidant, 2 parts by weight of vinyltrimethoxysilane as a dehydrating agent (product name: A-171 (manufactured by Nippon Unicar Company Limited)), 3 parts by weight of N-β-(aminoethyl)-γ-aminopropyltrimethoxysilane as an adhesion agent (product name: A-1120 (manufactured by Nippon Unicar Company Limited)) and 1 part by weight of dibutyltin bis acetylacetate as a curing catalyst. The initial fixability and extrudability thereof were determined by the method mentioned above. The results are shown in Table 1.

### (Example 2)

A curable resin composition was obtained by the same method described in Example 1 except that 50 parts by weight of the needle crystal filler (needle colloidal calcium carbonate, product name: SOCAL 90A (manufactured by SOLVAY S.A.)) was changed to 50 parts by weight of a needle crystal filler (sepiolite, product name: PANGEL S9 (manufactured by TOLSA S.A.)), then the initial fixability and extrudability thereof were measured. The results are shown in Table 1.

### (Example 3)

A curable resin composition was obtained by the same method described in Example 1 except that 50 parts by weight of the needle crystal filler (needle colloidal calcium carbonate, product name: SOCAL 90A (manufactured by SOLVAY S.A.)) was changed to 50 parts by weight of a needle crystal filler (wollastonite, product name: WIC40 (manufactured by Nordkalk Corporation)), then the initial fixability and extrudability thereof were measured. The results are shown in Table 1.

### (Example 4)

A curable resin composition was obtained by the same method described in Example 1 except that 20 parts by weight of the cycloparaffin-based plasticizer (a completely hydrogenated and cyclized saturated hydrocarbon mixture, product name: Exxsol D110 (manufactured by Exxon Mobil Corporation)) was changed to 20 parts by weight of a isoparaffin-based plasticizer (a branched hydrocarbon mixture having 15 to 19 carbon atoms, product name: Hydroseal G3H (manufactured by Total Corporation)), then the initial fixability and extrudability thereof were measured. The results are shown in Table 1.

### (Example 5)

A curable resin composition was obtained by the same method described in Example 1 except that the amount of ground calcium carbonate (product name: Carbital-110S (manufactured by Imerys Minerals Japan K.K.)) was changed from 100 parts by weight to 150 parts by weight and the amount of the needle crystal filler (needle colloidal calcium carbonate, product name: SOCAL 90A (manufactured by SOLVAY S.A.)) was changed from 50 parts by weight to 65 parts by weight, then the initial fixability and extrudability thereof were measured. The results are shown in Table 1.

### (Example 6)

A curable resin composition was obtained by kneading 100 parts by weight of polyoxypropylene (molecular weight 15,000, Mw/Mn=1.1) containing a reactive silyl group within the molecule which was synthesized by the process described in Synthesis Example 1 of International Publication No.91/13928, 80 parts by weight of ground calcium carbonate (product name: Carbital-110S (manufactured by Imerys Minerals Japan K.K.)), 40 parts by weight of a needle crystal filler (needle colloidal calcium carbonate, product name: SOCAL 90A (manufactured by SOLVAY S.A.)), 50 parts by weight of polyoxypropyrene with the molecular weight of 3,000, 20 parts by weight of a cycloparaffin-based plasticizer (a completely hydrogenated and cyclized saturated hydrocarbon mixture, product name: Exxsol D110 (manufactured by Exxon Mobil Corporation)), 20 parts by weight of titanium oxide, 15 parts by weight of an amide wax-type thixotropic agent (product name: Crayvallac Super (manufactured by Cray Valley Corporation)), 1 part by weight of styrenated phenol as an antioxidant, 2 parts by weight of vinyltrimethoxysilane as a dehydrating agent (product name: A-171 (manufactured by Nippon Unicar Company Limited)), 3 parts by weight of N-(β-aminoethyl)-γ-aminopropyltrimethoxysilane as an adhesion agent (product name: A-1120 (manufactured by Nippon Unicar Company Limited)), and 1 part by weight of dibutyltin bis acetylacetate as a curing catalyst, then the initial fixability and extrudability thereof were measured. The results are shown in Table 1.

### (Example 7)

A curable resin composition was obtained by the same method described in Example 1 except that 40 parts by weight of the needle crystal filler (needle colloidal calcium carbonate, product name: SOCAL 90A (manufactured by SOLVAY S.A.)) was changed to 40 parts by weight of a needle crystal filler (sepiolite, product name: PANGEL S9 (manufactured by TOLSA S.A.)), then the initial fixability and extrudability thereof were measured. The results are shown in Table 1.

### (Example 8)

A curable resin composition was obtained by the same method described in Example 1 except that 40 parts by weight of the needle crystal filler (needle colloidal calcium carbonate, product name: SOCAL 90A (manufactured by SOLVAY S.A.)) was changed to 40 parts by weight of a needle crystal filler (wollastonite, product name: WIC40 (manufactured by Nordkalk Corporation)), then the initial fixability and extrudability thereof were measured. The results are shown in Table 1.

### (Comparative Example 1)

A curable resin composition was obtained by the same method described in Example 1 except that 50 parts by weight of the needle crystal filler (needle colloidal calcium carbonate, product name: SOCAL 90A (manufactured by SOLVAY S.A.)) was changed to 50 parts by weight of a non-needle surface coated colloidal calcium carbonate (product name: Winnofil SPM (manufactured by SOLVAY S.A.)), then the initial fixability and extrudability thereof were measured. The results are shown in Table 1.

### (Comparative Example 2)

A curable resin composition was obtained by the same method described in Example 1 except that 20 parts by weight of the cycloparaffin-based plasticizer (a completely hydrogenated and cyclized saturated hydrocarbon mixture, product name: Exxsol D110 (manufactured by Exxon Mobil Corporation)) was changed to 20 parts by weight of phthalate ester-based DIDP (diisodecyl phthalate), then the initial fixability and extrudability thereof were measured. The results are shown in Table 1.

### (Comparative Example 3)

A curable resin composition was obtained by the same method described in Example 1 except that 20 parts by weight of the cycloparaffin-based plasticizer (a completely hydrogenated and cyclized saturated hydrocarbon mixture, product name: Exxsol D110 (manufactured by Exxon Mobil Corporation)) was changed to 20 parts by weight of phthalate ester-based DIDP (diisodecyl phthalate) and 50 parts by weight of the needle crystal filler (needle colloidal calcium carbonate, product name: SOCAL 90A (manufactured by SOLVAY S.A.)) was changed to 50 parts by weight of the non-needle surface coated colloidal calcium carbonate (product name: Winnofil SPM (manufactured by SOLVAY S.A.)), then the initial fixability and extrudability thereof were measured. The results are shown in Table 1.

### (Comparative Example 4)

A curable resin composition was obtained by the same method described in Example 1 except that 100 parts by weight of ground calcium carbonate (product name: Carbital-110S (manufactured by Imerys Minerals Japan K.K.)) and 50 parts by weight of the needle crystal filler (needle colloidal calcium carbonate, product name: SOCAL 90A (manufactured by SOLVAY S.A.)) to 150 parts by weight of ground calcium carbonate (product name: Carbital-110S (manufactured by Imerys Minerals Japan K.K.)), then the initial fixability and extrudability thereof were measured. The results are shown in Table 1.

### (Comparative Example 5)

A curable resin composition was obtained by the same method described in Example 5 except that 20 parts by weight of the cycloparaffin-based plasticizer (a completely hydrogenated and cyclized saturated hydrocarbon mixture, product name: Exxsol D110 (manufactured by Exxon Mobil Corporation)) was changed to 20 parts by weight of phthalate ester-based DIDP (diisodecyl phthalate) and 65 parts by weight of the needle crystal filler (needle colloidal calcium carbonate, product name: SOCAL 90A (manufactured by SOLVAY S.A.)) was changed to 65 parts by weight of the non-needle surface coated colloidal calcium carbonate (product name: Winnofil SPM (manufactured by SOLVAY S.A.)), then the initial fixability and extrudability thereof were measured. The results are shown in Table 1.

### (Comparative Example 6)

A curable resin composition was obtained by the same method described in Example 1 except that 50 parts by weight of the needle crystal filler (needle colloidal calcium carbonate, product name: SOCAL 90A (manufactured by SOLVAY S.A.)) was changed to 40 parts by weight of the non-needle surface coated colloidal calcium carbonate (product name: Winnofil SPM (manufactured by SOLVAY S.A.)), then the initial fixability and extrudability thereof were measured. The results are shown in Table 1.

### (Comparative Example 7)

A curable resin composition was obtained by the same method described in Example 1 except that 20 parts by weight of the cycloparaffin-based plasticizer (a completely hydrogenated and cyclized saturated hydrocarbon mixture, product name: Exxsol D110 (manufactured by Exxon Mobil Corporation)) was changed to 20 parts by weight of phthalate ester-based DIDP (diisodecyl phthalate), then the initial fixability and extrudability thereof were measured. The results are shown in Table 1.

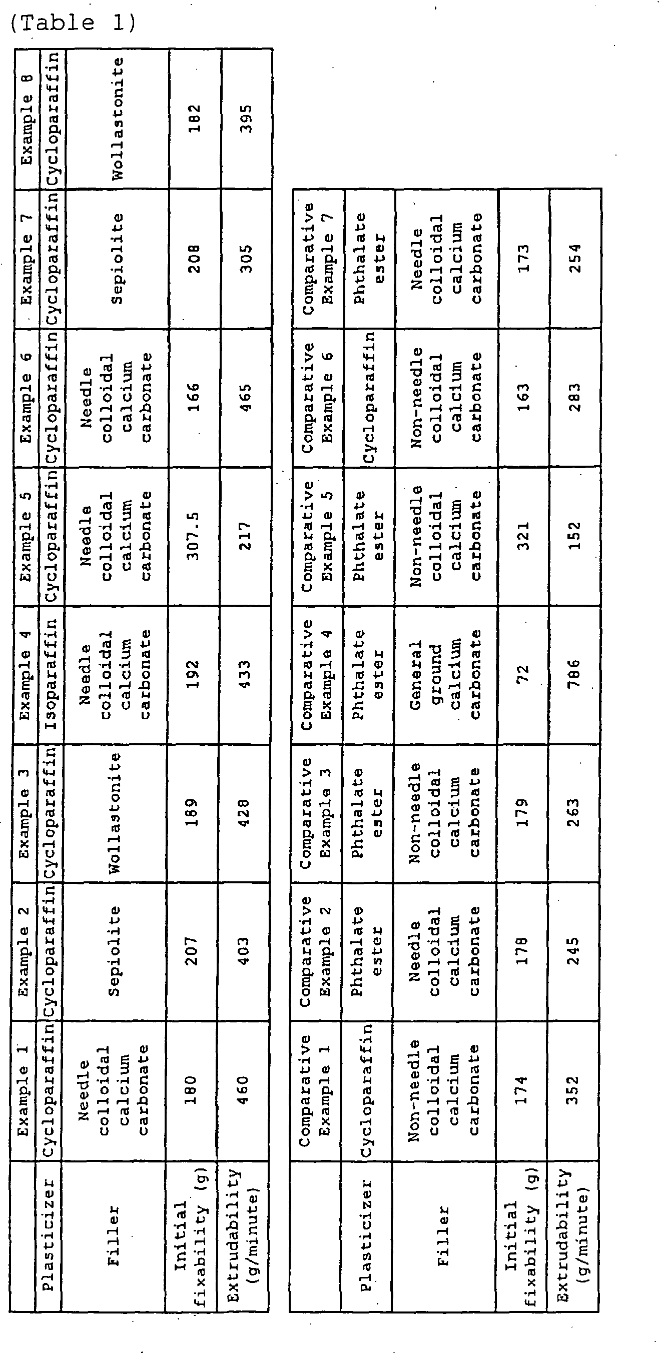

The extrudabilities of all of the compositions in Example 1 to 4 are not less than 400 g/minute and the initial fixabilities thereof are also not less than 180 g; these are good since they have both workability and fixability. On the other hand, the initial fixability of the composition in Comparative Example 1 is less than 180 g and the extrudability thereof is less than 400 g/minute. The initial fixabilities of the compositions in Comparative Example 2 and 3 are not less than 180 g, the extrudabilities thereof are, however, less than 300 g/minute. Although the composition in Comparative Example 4 has the extrudability as high as 786 g/minute, the initial fixability thereof is low. The composition in Example 5 compounded as a high viscous composition shows 307.5 g of the initial fixability and not less than 200 g/minute of the extrudability. On the other hand, although the initial fixability of the composition in Comparative Example 5 is high, the extrudability thereof is as low as 152 g/minute; therefore the workability thereof is not good.

The extrudabilities of all of the compositions in Example 6 to 8 are not less than 300 g/minute and the initial fixabilities thereof are also not less than 160 g. On the other hand, the initial fixabilities of the compositions in Comparative Example 6 and 7 are not less than 160 g, the extrudabilities thereof are, however, not more than 300 g/minute.

### INDUSTRIAL APPLICABILITY

The present invention provides a curable resin composition which comprises a reactive silyl group-containing organic polymer, is highly capable of being extruded from a cartridge and, even upon application thereof to vertical adherend surfaces, can exercise its initial fixability to fix the substrates in an instant.

## Claims

1. A curable resin composition
which comprises a polyoxyalkylene polymer (a) containing at least one reactive silyl group in each molecule, 5 to 50 parts by weight of a hydrocarbon-based plasticizer (b) per 100 parts by weight of (a) and 10 to 200 parts by weight of a needle crystal filler (c) on the same basis.

2. The curable resin composition according to Claim 1
which contains 20 to 40 parts by weight of the hydrocarbon-based plasticizer (b) per 100 parts by weight of the polyoxyalkylene polymer (a) containing at least one reactive silyl group in each molecule.

3. The curable resin composition according to Claim 1 or 2
wherein the hydrocarbon-based plasticizer (b) is a paraffin-based hydrocarbon.

4. The curable resin composition according to Claim 3
wherein the hydrocarbon-based plasticizer (b) is a cycloparaffin-based hydrocarbon or an isoparaffin-based hydrocarbon.

5. The curable resin composition according to any of Claims 1 to 4
wherein the needle crystal filler (c) is selected from the group consisting of sepiolite, asbestos, wollastonite, a needle crystal-type calcium carbonate, glass fiber, carbon fiber and organic fiber.

6. The curable resin composition according to Claim 5
wherein the needle crystal filler (c) is a needle crystal-type calcium carbonate.

7. The curable resin composition according to any of Claims 1 to 6
wherein the reactive silyl group of the polyoxyalkylene polymer (a) containing at least one reactive silyl group in each molecule is an alkoxysilyl group.

8. The curable resin composition according to any of Claims 1 to 7
wherein the extrudability thereof is not less than 200 g/minute and the initial fixability thereof is not less than 180 g.
